# EUROPEAN PATENT APPLICATION

(11) **EP 1 804 393 A2**
(43) Date of publication of application: **04.07.2007**
(21) Application number: 06256566.8
(22) Date of filing: 22.12.2006
(51) Int. Cl.: H04B 5/00, H04B 1/38

(54) **Battery pack for mobile communication terminal and NFC communication method using the same**

(30) Priority: 30.12.2005 KR 20050135828
(71) Applicant: SK Telecom Co., Ltd., Seoul 110-999 (KR); Hanchang System Corporation, Danwon-gu, Ansan-si Gyeonggi-do Seoul 425-839 (KR)
(72) Inventor: Cheon, Sung-Rock, Gwangmyeong-s Gyeonggi-do Seoul 423-758 (KR); Jeon, Jae-Sic, Songpa-gu Seoul 138-240 (KR); Kwon, O-Hyon, Gangnam-gu Seoul 135-280 (KR); Lee, Joo-SIk, Gangnam-gu Seoul 135-280 (KR)
(74) Representative: Neobard, William John

(57) **Abstract**

A battery pack for a mobile communication terminal includes an NFC unit, a smart card unit and an antenna. The NFC unit communicates with a mobile communication terminal body and communicates with the outside via non-contact NFC. The smart card unit communicates with the NFC unit. The antenna is configured such that the NFC unit transmits/receives signals via non-contact NFC through the antenna. Accordingly, the characteristics of analog signals transmitted/received through the antenna are prevented from being changed despite the frequent attachment and detachment of battery packs.

## Description

The present invention relates in general, to Near Field Communication (NFC) and, more particularly, to a battery pack for a mobile communication terminal and an NFC method. Embodiments relate to a battery pack which enables non-contact NFC with the outside through an NFC unit, and an NFC method using the battery pack.

The term "NFC" refers to non-contact near field communication technology that can be used to transmit data at low power over a short distance through the application of a Radio Frequency Identification (RFID) technique using a frequency band of 13.56 MHz. NFC has been standardized chiefly by European Computer Manufacturers Association (ECMA) International. Nokia, Sony and Philips have participated in the standardization and commercialization of NFC.

When NFC is used, not only basic information, such as telephone numbers, but also data, such as Moving Picture Experts Group-1/2 Audio Layer 3 (MP3) files and photos, can be exchanged merely by bringing two or more terminals close to each other, without requiring manipulation by a user.

Meanwhile, a mobile communication terminal, in which a module to which a smart card can be attached is included in the back of the mobile communication terminal body and an antenna is contained in a battery pack, has been introduced for use as a credit card or transit card.

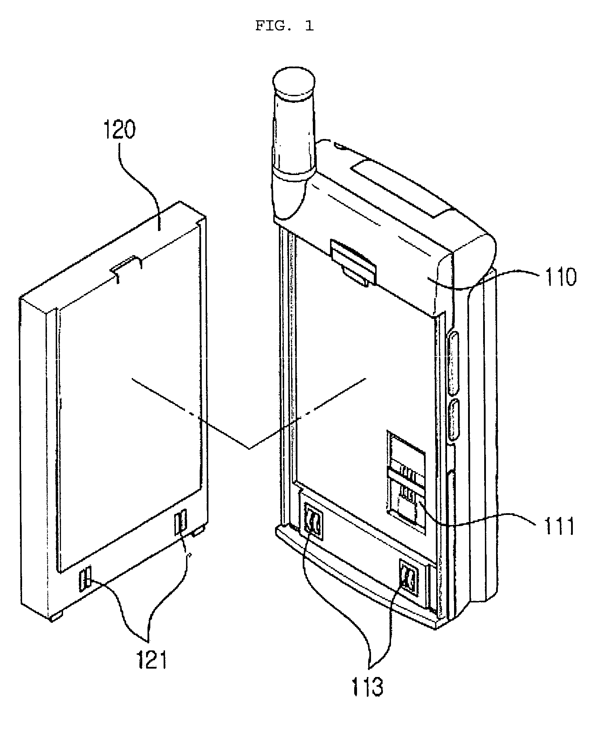

Referring first to FIG. 1, the conventional mobile communication terminal includes a mobile communication terminal body 110 and a battery pack 120.

The conventional mobile communication terminal body 110 is configured such that a smart card chip is attached to the back of the mobile communication terminal body 110. For example, a socket 111 corresponding to the chip specification of the smart card, compliant with the International Standards Organization (ISO) 7816 standard, may be formed in the back of the mobile communication terminal body 110.

When a smart card chip supporting a credit card or transit card function is mounted in the socket 111 in the back of the mobile communication terminal body 110 and the battery pack 120 containing an antenna is attached to the mobile communication terminal body 110, the smart card chip and a baseband chip included in the mobile communication terminal body 110 communicate via the ISO 7816 protocol, etc, analog signals from the smart card chip are transmitted to the antenna through connection terminals 113 and 121 between the mobile communication terminal body 110 and the battery pack 120, and analog signals received by the antenna are transmitted to the smart card chip through the connection terminals 113 and 121.

In general, antenna signals are high-frequency analog signals. The characteristics of the signal transfer between the smart card and the antenna are very important factors that affect the characteristics of the antenna. Accordingly, when analog signals are transmitted/received between the smart card chip and the antenna through the connection terminals 113 and 121 between the mobile communication terminal body 110 and the battery pack 120, the signal transfer characteristics of the connection terminals 113 and 121 between the mobile communication terminal body 110 and the battery pack 120 must be appropriately maintained.

However, the connection terminals 121 of the battery pack 120 or the connection terminals 113 of the mobile communication terminal body 110 become covered with dust or worn away due to frequent attachment and detachment of the battery pack 120, therefore the signal transfer characteristics of the connection terminals 113 and 121 may be significantly changed.

When the signal transfer characteristics of the connection terminals 113 and 121 between the mobile communication terminal body 110 and the battery pack 120 are significantly changed, signals received from the outside and signals transmitted to the outside through the antenna are distorted. Consequently, a serious problem, in which the transactions of the transit card or credit card through the smart card chip are erroneously performed, may occur.

Accordingly, there is a need for a new battery pack, which does not change the characteristics of signals transmitted/received through the antenna despite the attachment and detachment of the battery pack to and from the mobile communication terminal, and allows different mobile communication terminals to exchange desired data in a Peer-to-Peer (P2P) manner as well as through communication with a reader, and for an NFC method using the battery pack.

Accordingly, the present invention has been made keeping in mind the above problems occurring in the prior art.

An object of embodiments is to provide a battery pack for a mobile communication terminal, which does not change the characteristics of signals transmitted/received through an antenna despite the frequent attachment and detachment of the battery pack to and from a mobile communication terminal, and an NFC method using the battery pack.

Another object of embodiments is to provide a battery pack for a mobile communication terminal, which allows the mobile communication terminals to exchange not only basic information, such as telephone numbers, but also MP3 files, photo data, information for electronic commerce, such as an authorized certificate, without requiring manipulation by a user when two or more mobile communication terminals are brought close to each other, and an NFC method using the battery pack.

Still another object of embodiments is to provide a battery pack for a mobile communication terminal, which allows smart card modules compliant with ISO 7816 or ISO 14443 protocols of general contact/contactless smart cards, as well as the SigIn-SigOut-Connection (S2C) protocol of NFC communication, to be inserted in a plug-in fashion and to be compatible with NFC communication.

Thus there is disclosed a battery pack for a mobile communication terminal, including an NFC unit for communicating with a mobile communication terminal body and communicating with the outside via non-contact NFC, a smart card unit for communicating with the NFC unit, and an antenna configured such that the NFC unit transmits/receives signals via non-contact NFC.

The NFC unit includes all circuit devices that perform NFC in accordance with the NFC standards.

The smart card module includes all types of IC cards for storing personal information, a user ID, the amount of stored money for the use of a service, Digital Rights Management (DRM) information, and information about authorized certificates.

The NFC unit may communicate with the mobile communication terminal by transmitting/receiving digital signals based on a digital communication protocol.

The battery pack of the mobile communication terminal may further include a protocol matching unit for performing protocol conversion between the NFC unit and the smart card unit.

An antenna matching circuit may be arranged between the NFC unit and the antenna.

Furthermore, there is disclosed an NFC method, including the steps of an NFC unit within a battery pack for a mobile communication terminal communicating with a mobile communication terminal body, the NFC unit communicating with the outside by transmitting/receiving signals through an antenna within the battery pack via non-contact NFC, and a smart card unit communicating with the NFC unit.

In the step of communication with the mobile communication terminal body, the NFC unit may communicate with the mobile communication terminal body by transmitting/receiving digital signals based on a digital communication protocol.

The NFC method may further include the step of performing protocol conversion between the NFC unit and the smart card unit.

Embodiments of the invention will now be described, by way of example only, with reference to the accompanying drawings, in which:
FIG. 1 is an exploded perspective view of a conventional mobile communication terminal;
FIG. 2 is a block diagram of an embodiment of a battery pack for a mobile communication terminal;
FIG. 3 is a block diagram of another embodiment of a battery pack for a mobile communication terminal;
FIG. 4 is a block diagram of an example of a protocol matching unit shown in FIG. 3;
FIG. 5 is a block diagram of an example of a smart card module shown in FIG. 3;
FIG. 6 is a flowchart of an embodiment of a NFC method;
FIG. 7 is a view illustrating an example of the use of the mobile communication terminal; and
FIG. 8 is a view of another example of the use of the mobile communication terminal.

In the various figures, like reference signs indicate like parts.

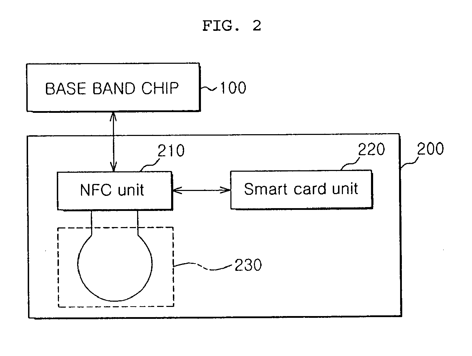

Referring to FIG. 2, the battery pack 200 for a mobile communication terminal includes an NFC unit 210, a smart card unit 220, and an antenna 230.

The mobile communication terminal equipped with the battery pack 200, which is shown in FIG. 2, can perform the function of a smart card, as in a transit card or a credit card, through communication with a reader. The mobile communication terminal equipped with the battery pack 200, which is shown in FIG. 2, can also exchange data, such as personal information, telephone number information and/or copyrighted information, with peers equipped with different NFC devices, that is, mobile communication terminals equipped with devices having constructions corresponding to that of the battery pack 200 shown in FIG. 2.

The NFC unit 210 communicates with the baseband chip 100 of a mobile communication terminal body, and also communicates with the outside via non-contact NFC. The NFC unit 210 can be connected to the mobile communication terminal body through a connector, and can communicate with the baseband chip 100 of the mobile communication terminal body by transmitting/receiving digital signals based on a digital communication protocol, such as I2C, SPI or UART. The NFC unit 210 and the baseband chip 100 may be connected through contact terminals formed in the battery pack of a conventional mobile communication terminal and the terminal body, and may be connected through contact terminals, which are newly formed in the battery pack and the terminal body, other than the conventional contact terminals. That is, the NFC unit 210 within the battery pack and the baseband chip 100 within the mobile communication terminal can be connected using all types of contact terminals of the battery pack and the terminal body.

The NFC unit 210 may generate a Radio Frequency (RF) signal corresponding to a signal received from the baseband chip 100 of the mobile communication terminal body or the smart card unit 220, and transmit the generated RF signal to a reader or a peer terminal through the antenna 230. Furthermore, the NFC unit 210 may generate a signal corresponding to an RF signal received through the antenna 230, and transmit the generated signal to the baseband chip 100 of the mobile communication terminal body or the smart card unit 220.

The smart card unit 220 communicates with the NFC unit 210. The communication between the smart card unit 220 and the NFC unit 210 may be performed via the S2C protocol.

The smart card unit 220 may include smart card modules, including all types of Integrated Circuit (IC) cards for storing personal information, a user ID, the amount of credit i.e. stored money for the use of a service, Digital Rights Management (DRM) information, authorized certificate information, and so on.

In the embodiment of FIG. 2, there is no influence on contacts for the antenna 230 despite the frequent attachment and detachment of the battery pack 200 to and from the mobile communication terminal body. That is, in the embodiment of FIG. 2, the antenna 230 is connected to the NFC unit 210 (through an antenna matching circuit, etc.) within the battery pack 200, and only the contact between the NFC unit 210 and the baseband chip 100 of the mobile communication terminal body is changed by the attachment and detachment of the battery pack 200.

However, since the NFC unit 210 and the baseband chip 100 communicate with each other via digital signals, there is no large influence even if variation in the impedance of the contacts occurs due to the repeated attachment and detachment of the battery pack 200. Accordingly, if NFC is conducted using the battery pack 200 of the mobile communication terminal shown in FIG. 2, the characteristics of analog signals transmitted/received through the antenna can be prevented from being changed by the frequent attachment and detachment of the battery pack 200.

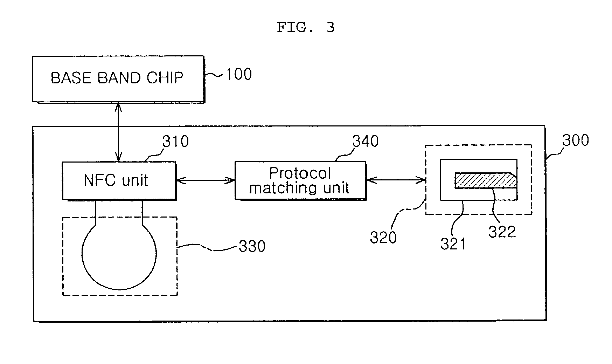

Referring next to FIG.3, a battery pack 300 for a mobile communication terminal includes an NFC unit 310, a protocol matching unit 340, a smart card unit 320 and an antenna 330.

The battery pack 300 shown in FIG. 3 can perform the function of a smart card, as in a transit card or a credit card, through communication with a reader, and can exchange data, such as personal information, telephone number information and/or copyright information, with peers equipped with different NFC devices, like the battery pack 200 shown in FIG. 2.

The NFC unit 310 communicates with the baseband chip 100 of the mobile communication terminal body, and also communicates with the outside via non-contact NFC. The NFC unit 310 may be connected to a mobile communication terminal body through a contact terminal, and may communicate with the baseband chip 100 of the mobile communication terminal body by transmitting/receiving digital signals based on a digital communication protocol, such as I2C, SPI or UART.

The NFC unit 310 may generate an RF signal corresponding to a signal received from the baseband chip 100 of the mobile communication terminal body or the smart card unit 320, and transmit the generated RF signal to a reader or a peer terminal through the antenna 330. Furthermore, the NFC unit 310 may generate a signal corresponding to an RF signal received through the antenna 330, and transmit the generated signal to the baseband chip 100 of the mobile communication terminal body or the smart card unit 320.

The protocol matching unit 340 performs protocol conversion between the NFC unit 310 and the smart card unit 320. For example, in the case where the NFC unit 310 performs communication via the S2C protocol and the smart card unit 320 performs communication via the ISO 7816 or ISO 14443 protocol, the protocol matching unit 340 converts S2C protocol-based signals into ISO 7816 or ISO 14443 protocol-based protocol signals and converts ISO 7816 or ISO 14443 protocol-based signals into S2C protocol-based signals.

In this case, the protocol matching unit 340 may perform protocol conversion according to the type of smart card module 322 used in the smart card unit 320. In this case, the smart card unit 320 may transmit a chip identification signal, indicating the type of smart card module 322, to the protocol matching unit 340. The protocol matching unit 340 may identify the type of smart card module 322 using the received chip identification signal, and then perform protocol conversion.

The smart card unit 320 communicates with the NFC unit 310 through the protocol matching unit 340.

The smart card unit 320 may include smart card modules 322, including all types of IC cards for storing personal information, a user ID, the amount of stored money for use of a service, DRM information, authorized certificate information, and so on.

In this case, the smart card unit 320 may include a plug-in socket 321 into which the smart card module 322 is inserted. In other words, various types of smart card modules 322 supporting a variety of protocols may be inserted into the plug-in socket 321.

In the embodiment of FIG. 3, the antenna 330 is in contact with the NFC unit 330 within the battery pack 300, and only the contact between the NFC unit 310 and the baseband chip 100 of the mobile communication terminal body is changed by the attachment and detachment of the battery pack 300, as in FIG. 2.

Therefore, if NFC is performed using the battery pack of the mobile communication terminal 300 shown in FIG. 3, the characteristics of analog signals transmitted and received through the antenna can be prevented from being changed by the frequent attachment and detachment of the battery pack 300.

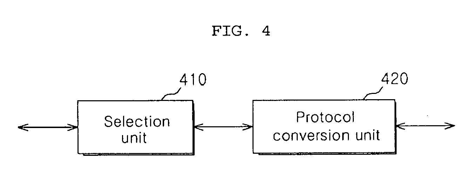

Referring now to FIG. 4, the protocol matching unit includes a selection unit 410 and a protocol conversion unit 420.

In the case where the smart card unit and the NFC unit transmit/receive signals via the same protocol, the selection unit 410 bypasses signals, which are input to and output from the NFC unit, to the smart card unit.

In contrast, in the case where the smart card unit and the NFC unit transmit/receive signals via different protocols, the selection unit 410 outputs signals, which are input to and output from the NFC unit, to the protocol conversion unit 420 as signals to be protocol-converted. Accordingly, the protocol conversion unit 420 performs protocol conversion so that signals to be protocol-converted are compatible with signals input to and output from the smart card unit according to the type of smart card module mounted in the smart card unit.

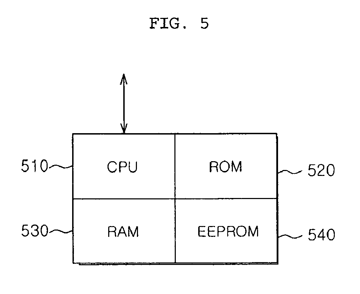

Referring next to FIG. 5, the smart card module 322 may include a Central Processing Unit (CPU) 510, Read Only Memory (ROM) 520, Random Access Memory (RAM) 530 and Electrically Erasable Programmable ROM (EEPROM) 540.

The CPU 510 is responsible for the overall control of the smart card module 322.

The ROM 520 stores all system programs necessary for the operation of the smart card module 322.

The RAM 530 stores temporary data necessary for the performance of operations on internal data.

The EEPROM 540 stores authentication information necessary for transmission and reception in conjunction with an external card reader or other terminals.

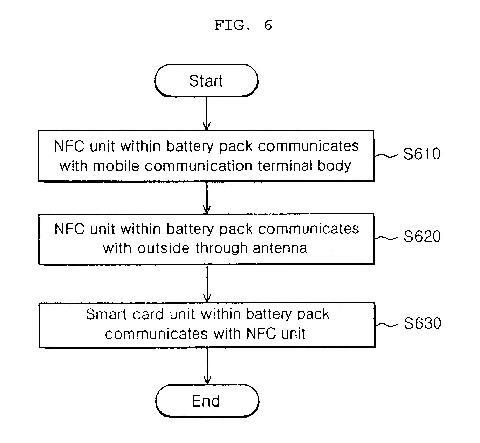

Referring to FIG. 6, in a NFC method, the NFC unit within the battery pack for the mobile communication terminal communicates with the mobile communication terminal body at step S610.

According to the NFC method, the NFC unit can communicate with the mobile communication terminal body by transmitting/receiving digital signals based on the digital communication protocol.

Thereafter, the NFC unit communicates with the outside by transmitting/receiving signals through the antenna within the battery pack via non-contact NFC at step S620.

In this case, since both the NFC unit and the antenna are included in the battery pack, there is no influence due to variation in the impedance of contacts, which results from the attachment and detachment of the battery pack.

According to the NFC method, the smart card unit communicates with the NFC unit at step S630.

In this case, the NFC method may further include the step of performing protocol conversion between the NFC unit and the smart card unit. The step of performing protocol conversion may include performing protocol conversion between a first protocol used for communication with the NFC unit and a second protocol used for communication with the smart card unit according to the type of smart card module 322 used in the smart card unit.

The respective steps shown in FIG. 6 may be performed in the order shown in FIG. 6, in the reverse order thereof, or simultaneously.

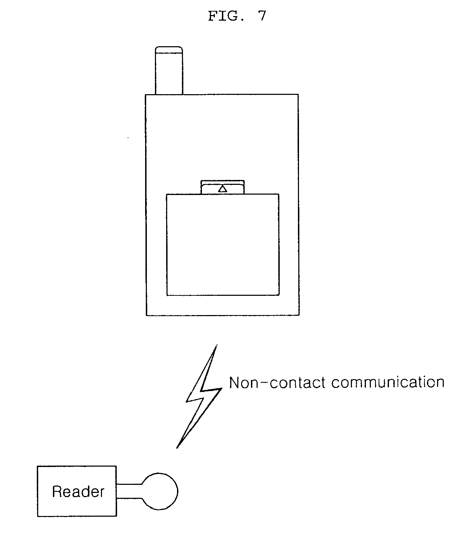

Referring to FIG. 7, an embodiment of the mobile communication terminal can communicate with a reader, with the battery pack in which the NFC device is mounted being attached to the mobile communication terminal.

For example, a user who is attempting to pass through a security gate can transmit authentication information to a reader through the antenna within the battery pack by bringing a mobile communication terminal, equipped with the battery pack shown in FIG. 2 or 3, close to the reader that is installed at the security gate to perform entry authentication. When information requesting authentication is received from the reader through the antenna within the battery pack of the mobile communication terminal shown in FIG. 7, information based on the received signal can be transmitted to the smart card module through the NFC unit within the battery pack. In this case, the protocol matching unit may perform protocol conversion between the NFC unit and the smart card module.

The smart card module extracts authentication information, such as a user ID for user identification, stored in EEPROM under the control of a CPU. The extracted authentication information may be transmitted to the NFC unit, and then transmitted to the external reader through the antenna. If corresponding authentication is successful in the reader, the user can pass through the security gate.

Furthermore, in the case where a reader is used for payment of transportation or shopping, a user brings a mobile communication terminal, equipped with an embodiment of a battery pack, close to the reader as described above and can then make payment for transportation or shopping if authentication for the amount of stored money is successful in the reader.

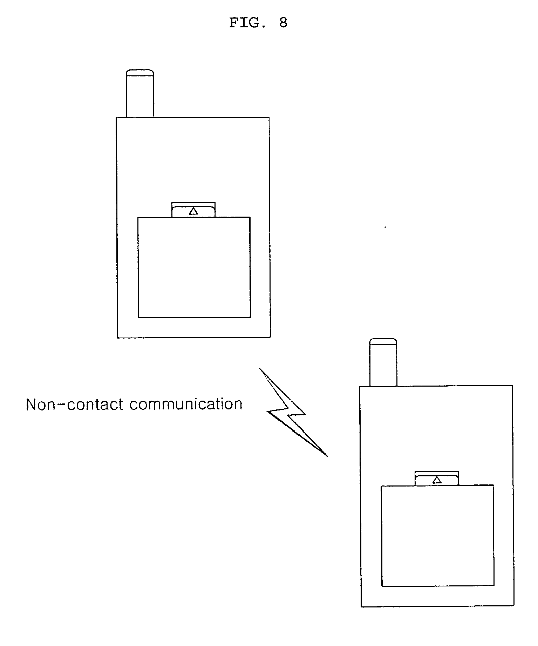

Referring to FIG. 8, embodiments of battery packs may be mounted in different mobile communication terminals such that the mobile communication terminals can communicate with each other.

For example, currently, most users store and use electronic name cards, photos, moving images, and/or telephone directories in their mobile communication terminals. However, whenever terminals are changed, users can use the same personal information, which was stored in previous terminals, in current terminals only when such personal information is re-input or downloaded.

However, in the mobile communication terminal equipped with embodiments of battery packs, the personal information can be managed in the smart card module within the battery pack. In the case where the personal information is managed in the smart card module, it is possible to move the personal information to a peer terminal through communication between the mobile communication terminals.

For example, mobile communication terminals equipped with embodiments of battery packs are brought close to each other, and one of the mobile communication terminals attempting to transmit personal information can send the personal information, along with authentication information, to the other mobile communication terminal through the antenna. When the authentication information and the personal information are received through the antenna within the battery pack, the other mobile communication terminal can transmit information based on the received signals to the smart card module through the NFC unit. In this case, the smart card module can perform authentication under the control of the CPU, and store and manage the personal information included in the received signals in the EEPROM if the authentication is successful.

As described above in embodiments, the characteristics of analog signals transmitted/received through the antenna can be prevented from being changed despite the frequent attachment and detachment of the battery pack of the mobile communication terminal.

Furthermore, two or more mobile communication terminals can exchange not only basic information, such as telephone numbers, but also MP3 files, photo data, information for electronic commerce, such as an authorized certificate, etc. without manipulation by a user, as long as they are brought close to each other.

Furthermore, smart card modules, based not only on the S2C protocol of NFC but also on the ISO protocols of general contact/non-contact smart cards, can be inserted into the socket in a plug-in fashion and are compatible with NFC.

Furthermore, devices for NFC are all included in the battery pack, therefore the mobile communication terminal body can be made lightweight and slim.

Embodiments have now been described. The invention is however not restricted to the features of the embodiments.

## Claims

1. A battery pack for a mobile communication terminal, comprising:
a Near Field Communication (NFC) unit for communicating with a mobile communication terminal body and communicating with the outside via non-contact NFC;
a smart card unit for communicating with the NFC unit; and
an antenna configured to allow the NFC unit to transmit/receive signals via non-contact NFC.

2. A battery pack according to claim 1, wherein the NFC unit is configured to communicate with the mobile communication terminal by transmitting/receiving digital signals based on a digital communication protocol.

3. A battery pack according to claim 2, further comprising a protocol matching unit for performing protocol conversion between the NFC unit and the smart card unit.

4. A battery pack according to claim 2, wherein:
the smart card unit includes a smart card module having an additional storage device; and
the communication between the NFC unit and the smart card unit is performed via a SigIn-SigOut Connection (S2C) protocol.

5. A battery pack according to claim 3, wherein the smart card unit comprises a plug-in socket into which a smart card module may be inserted.

6. A battery pack according to claim 5, wherein the protocol matching unit is configured to perform protocol conversion between a first protocol used for communication with the NFC unit and a second protocol used for communication with the smart card unit, according to the type of smart card module that is inserted into the plug-in socket.

7. A battery pack according to claim 6, wherein the first protocol is an S2C protocol and the second protocol is an International Standards Organization (ISO) protocol.

8. A battery pack according to claim 6, wherein the protocol matching unit comprises:
a selection unit for selectively bypassing S2C protocol-based signals, which are input to and output from the NFC unit, to the smart card module, or outputting the signals as signals to be protocol-converted; and
a protocol conversion unit for performing protocol conversion so that the S2C protocol-based signals to be protocol-converted, which are output from the selection unit, and signals, which are input to and output from the smart card unit, are compatible with each other.

9. A battery pack according to claims 3 or 5, wherein the smart card module is arranged to output user information for user identification, authorized certificate information, copyright information or information about an amount of stored money for use of a service, in response to an input signal.

10. An NFC method, comprising the steps of:
an NFC unit within a battery pack for a mobile communication terminal communicating with a mobile communication terminal body;
the NFC unit communicating with the outside by transmitting/receiving signals through an antenna within the battery pack via non-contact NFC; and
a smart card unit communicating with the NFC unit.

11. An NFC method according to claim 10, wherein the communication with the mobile communication terminal body comprises the step of the NFC unit communicating with the mobile communication terminal body by transmitting/receiving digital signals based on a digital communication protocol.

12. An NFC method according to claim 10, further comprising the step of performing protocol conversion between the NFC unit and the smart card unit.

13. An NFC method according to claim 12, wherein the protocol conversion comprises the step of performing protocol conversion between a first protocol used for communication with the NFC unit and a second protocol used for communication with the smart card unit according to the type of smart card module that is used in the smart card unit.
